# EUROPEAN PATENT SPECIFICATION

(11) **EP 3 238 900 B1**
(45) Date of publication and mention of the grant of the patent: **04.05.2022**
(21) Application number: 17159819.6
(22) Date of filing: 08.03.2017
(51) Int. Cl.: B28B 11/00, C04B 41/80, B05B 13/04, B05B 14/00, B28B 11/04, B05B 1/14

(54) **MULTIAXIAL APPLICATOR DEVICE FOR APPLICATION OF DECORATING PRODUCTS ON CERAMIC OBJECTS, AND METHOD FOR APPLYING SAID PRODUCTS**
MEHRACHSIGE VORRICHTUNG ZUM AUFTRAGEN VON DEKORATIVEN PRODUKTEN AUF KERAMISCHEN GENENSTANDEN, UND VERFAHREN ZU IHRER AUFTRAGEN
DISPOSITIF A AXES MULTIPLES POUR APPLIQUER DES PRODUITS DE DECORATION SUR DES OBJETS CERAMIQUES, ET METHODE D'APPLICATION DESDITES PRODUITS

(30) Priority: 29.04.2016 IT UA20163013
(43) Date of publication of application: 01.11.2017
(73) Proprietor: Air Power Group S.p.A., 42013 Casalgrande (Reggio Emilia) (IT)
(72) Inventor: MALAVASI, Paolo, 41019 Soliera (IT)
(74) Representative: Ruzzu, Giammario

(56) References cited:
- EP-A1- 2 090 374
- CH-A- 442 953
- US-A- 4 233 933

## Description

### DISCLOSURE OF THE INVENTION

The present invention relates to the technical sector relating to the production of enamelled or otherwise decorated items such as ceramic tiles or slabs, bricks and the like.

In particular, the present invention relates to a device and a corresponding method for applying a base, decoration or finishing layer, consisting of glaze, engobe, crystalline or other decorative products in liquid, pasty or powdered form on the above items. The following description will discuss, by way of not limitative example, the application of these products on ceramic tiles or slabs.

### INVENTION CORRELATED PRIOR ART

It is well known that, in the production of ceramic tiles, one or more operations for applying decorating or (base) decoration preparatory products to the exposed surface of these tiles are carried out.

Such operations include the application, on the entire surface of each tile, of at least one homogeneous layer of a product, for example glaze or engobe, in liquid or semi-liquid form, or a powdered product, consisting of fine glass particles.

For this purpose, spray application and supply chain techniques are used, by means of which the product is applied in the production line, i.e. while the tiles are transported continuously on a conveyor, from the press to the kilns and, sometimes after the same kilns, in finishing stations.

In spray application techniques application generally occurs within cabinets closed with air barriers, which the tiles cross, flowing with continuous motion on a belt conveyor. The cabinets are equipped, in their upper parts, with one or more dispensers, that can operate with or without the application of air, to obtain a jet or a series of jets of minute drops of the product, or a spray of powdered enamel in case of dry application, that is/are oriented towards the transiting tiles.

The dispensers operate continuously, delivering the product both in the presence and absence of tiles. Dispensing cannot be stopped, nor subjected to variations in the supply pressure, in order to obtain an homogeneous and constant application on the products.

The product being dispensed but not deposited on the tiles is collected into a recovery circuit. The angular aperture of the jet can be defined on the basis of the distance from the tile and of its size.

These techniques obtain good results in terms of uniformity of application for small tile formats. However, for those tiles having dimensions that are currently most widely used, typically with a width greater than 600 mm, differences can be noticed between the areas covered directly by the jet and surrounding areas, so that significant differences are evident between the central part and the lateral ones, also depending on the amount of product deposited on the surface. The problem is even more evident with the current production techniques for production of large size tiles and porcelain stoneware tiles. The latter, in particular, are obtained by means of continuous compactors, which provide greater width products of 1600-1800 mm and a length of a few meters (usually about 4.000 mm).

A particularly homogeneous preparation of the undercoat is also required by modern color application technologies that use digital decorators. In fact, these latter must operate on tiles previously prepared with an extremely uniform undercoat, both as to thickness and to hue, to obtain satisfactory results.

To facilitate the solution of the problem, a technique is known that consists in mounting the dispenser on a sliding carriage, moving along a traverse, or axis, arranged perpendicular to the direction of displacement of the tiles, above the conveyor. The motion of the dispenser in the transverse direction relative to the direction of transport of the tiles allows a distribution of the product on the tile that limits non-homogeneity. Similarly the movement of the jet can be provided by oscillating the applicator, for example in a vertical plane perpendicular to the conveying direction.

With such techniques more than one passage of the product dispenser can be performed on the same tile, so providing a path of the product jet resulting from the combination of the directions and speed of the transport and the transverse motion of the applicator. In essence, a zig-zag path is formed on the tile, whose pitch depends on the longitudinal speed of the tile advancement and the transverse motion speed of the brush.

The product layer thus applied is, however, still little homogeneous and the motion speed of the applicator cannot be indefinitely increased to reduce the pitch of the several passes. The drawback still remains significant, especially for large sizes.

In an attempt to improve the distribution of the product on the tile, the use of a movable frame is known on which the bar with the dispenser is mounted so that it can slide transversely. In this way, the frame is moved along the conveyor in the same line of movement of the tiles, so reciprocating with concordant or discordant movements with respect to the forward direction of the same.

Even if this improves the effectiveness of the application, the prior art device described is complex, both in construction and in operation. Many actuating members have to be provided both for the carriage, that moves transversely, and for the frame that goes back and forth. Moreover, the correct positioning of the frame for each shift may present critical moments, especially when the size of the tiles is changed.

In any case, a so complicated construction absolutely cannot operate with high operational speeds typical of decorating machines operating in a production line, which are typically of the order of 20 meters/min. Furthermore, it should be taken into account that the production and decoration of slabs and large tiles are almost always carried out in direct connection with the kiln, that is to say that the product is brought from forming presses directly in line towards the kilns, without any storage phase of the raw product. This means that the decorating machines that operate in the production line must ensure, in addition to a sufficient application speed, also a high degree of operational continuity, which does not require frequent interruptions of the application operations; each interruption in the application implies in fact interruption of the whole production line, with obvious productivity losses and consequent economic damage.

Document EP 2 090 374 A1 (Ge Ma Ta S.p.A.) describes a machine for painting or colouring pieces of leather or skins (P) with large surfaces, through the use of airbrushes or spray guns (K), which are independently moved above the leather pieces (P) to be painted along transverse guides. The leather pieces are made advance along a predetermined direction and at least four airbrushes or spray guns (K) are foreseen moving with alternate rectilinear movements perpendicular to the advancing direction of the leather pieces (P) to be painted. The machine is characterised by each airbrush or spray gun (K) being equipped with independent driving means (1,2,3,4). The document US 4 233 933 (Dorian Gray) describes a machine for applying a spray coating across the width of a glass ribbon carried on a conveyor moving below the machine. The machine includes two spray applying devices which commence their spraying at opposite edges of the moving ribbon of glass. The applying devices are moved in a simultaneous manner at the same speed, but in opposed directions, from one edge to the other edge of the glass ribbon by a common driving system, and are cycled back and forth in the aforedescribed manner continuously as the ribbon of glass is moved thereunder so that a coating is applied to the moving ribbon of glass. The document CH 442 953 (Henkel) describes a device for application of adhesive strips on a mobile surface, in which an applicator nozzle is moved along a line that is inclined with respect to the longitudinal axis, i.e. the forward direction of the surface. More than one applicator nozzle is provided.

### OBJECTS OF THE INVENTION

The main object of the present invention is to propose a multi-axis applicator of glazes, engobes or similar products on the surface of a ceramic article, such as a tile, capable of providing a homogeneous layer of product even on large size tiles, and that can also be used in production lines with typical advancement speed of such lines.

Yet another object of the invention is to propose a multi-axis applicator capable of minimizing the time when the nozzles dispense product out of the tiles and thereby optimizing the consumption of the decorating product.

A further object of the invention is to propose a multi-axis applicator capable of reducing the downtime of the line due to the cleaning operations of the decoration cabinet in which it is installed.

Another object of the invention is to propose a multi-axis applicator which is simple in construction and in operation, so as to have a positive influence on the realization and maintenance costs.

The above mentioned objects, and others, are wholly obtained, in accordance with the contents of claims, by means of a multi-axis applicator device that enables the application of products, such as glaze, engobe or similar products, on ceramic articles, such as ceramic slabs or tiles, in a production line with a high conveying speed. The articles are transported in succession on a conveyor in a predetermined forward direction.

The applicator device is provided with a plurality of dispensers, connected to a control unit for dispensing a jet of product towards each article in transit.

The applicator device comprises a first motor-driven carriage and at least a second motor-driven carriage, each of them bearing mounted at least one dispenser, mobile with reciprocating motion above the conveyor, between two extreme positions, for moving the related dispensers from one side to other of the conveyor.

The strokes of the motor-driven carriages are controlled by a control unit in step relation with respect to each other and the advancement of the articles.

The above-mentioned step relation is defined in an independent manner between the motor-driven carriages, and is such that the areas of application of the respective dispensers are suitably spaced apart from one another.

### Brief Description of the Drawings

The characteristics of the invention, as they result from the claims, are highlighted in the following detailed description, with reference to the enclosed drawings, in which:
- Fig. 1 illustrates a perspective view of a cabinet for application of a decorating product onto a ceramic article, which bears mounted a multi-axis applicator device according to the present invention;
- Fig. 2 illustrates a side view of the cabinet in Figure 1;
- Fig. 3 illustrates a upper view of the cabinet in Figure 1;
- Fig. 4 illustrates the multi-axis applicator device of Figure 1 without the cover of the cabinet, and a diagram of application of a decoration product on a ceramic article obtained according to the method of the invention, with the dispensers actuated in step relation;
Fig. 5 illustrates the multi-axis applicator device of Figure 1 without the cover of the cabinet, and a diagram of application of a decoration product on a ceramic article obtained according to the method of the invention, with the dispenser of the second carriage actuated according to a temporally staggered mode with respect to the dispenser of the first carriage.

### DETAILED DESCRIPTION OF THE INVENTION

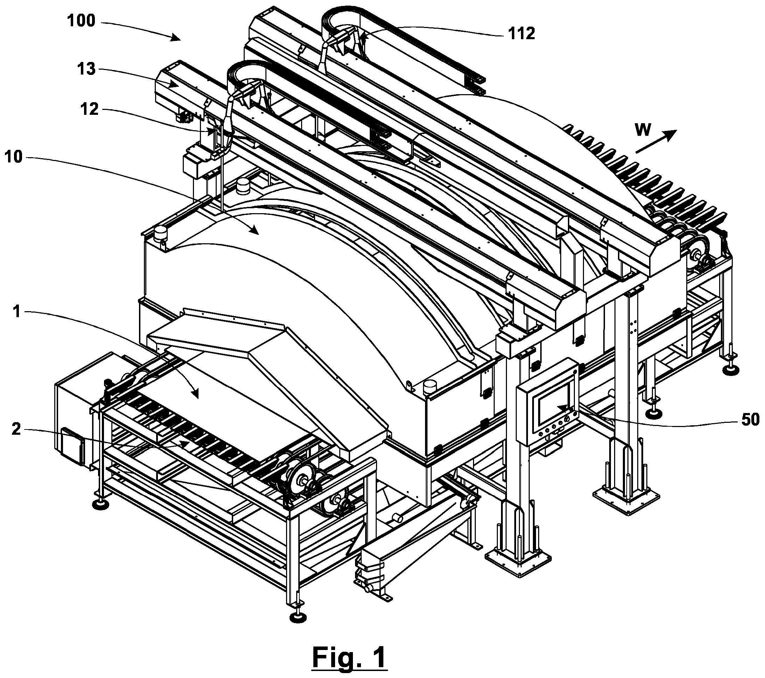

With reference to Figure 1, and to a preferred but not exclusive embodiment of the invention, numeral 10 indicates, as a whole, a cabinet for the spray application of a layer of glaze, engobe, crystalline or similar products, on the surface of ceramic articles 1. The invention is applicable indifferently to items such as tiles of any size, and also, and especially, in large size slabs, produced with continuous compactors. We will use the generic term items in the following, for simplicity, meaning with that both the slabs and the tiles.

The application cabinet 10 is mounted in any position along a continuous production line of said articles, along a path that from forming presses of the raw items leads, passing through one or more treatment stations (not shown), to firing kilns of the same and any application stations of a final protective layer.

A belt conveyor 2, of known type, passes through the cabinet 10 and is intended to support and transport in sequence the articles 1, suitably spaced apart, according to a forward direction W.

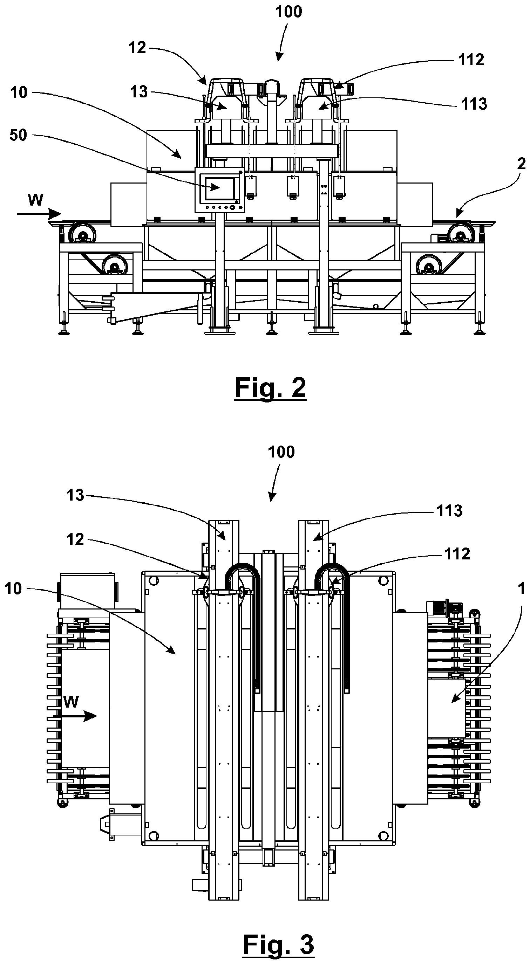

The application cabinet 10 comprises containment environment, a tank for product collection, a control unit 50, product feed devices and for detection of the articles 1 passage and localization of the same, whose structure and functions are substantially known and widely used in ceramic plants. For this reason, and in order to simplify the illustration and the disclosure of the structure of the invention, they have not been reproduced in detail, but shown in their entirety in Figures 1, 2 and 3.

As better illustrated in the following, spray dispensers 11 are operated within the application cabinet 10 and consist of as many spray guns or "airless" dispensers, fed by a suitable pump (not shown) and controlled by the control unit 50 of the cabinet 10 to deliver product jets to the article 1, in a continuous manner and without interruptions of dispensing.

As will be more fully described below, each dispenser 11 is adapted to apply the decoration product on the article 1 within application areas consisting of straight bars, the width of which depends on the opening of the beam 11 from the dispenser, and then on the setting of its nozzle, and its distance from article 1. In addition, according to the invention, the reciprocating motion of the dispensers 11, in combination with the direction of conveyance of the articles 1, defines an application path divided into successive back and forth passes.

In particular, the multi-axis applicator device 100, subject of the invention, comprises a first axis formed by a first motor-driven carriage 12, supported by a corresponding guide 13 which extends above the conveyor 2, transversely to the conveyance direction W of the articles 1, for an extension greater than the maximum width of the same.

The first motor-driven carriage 12 is movable with a reciprocating motion, in a direction line V, under control of the control unit 50 of the cabinet 10 by means of suitable actuators and movement timing means included in a manager program of the first motor-driven carriage 12.

The movements of the first motor-driven carriage 12 are controlled between two stop and motion reversing extreme positions P1, P2. These extreme positions are located outside the transit area of the articles 1, on opposite sides with respect to them.

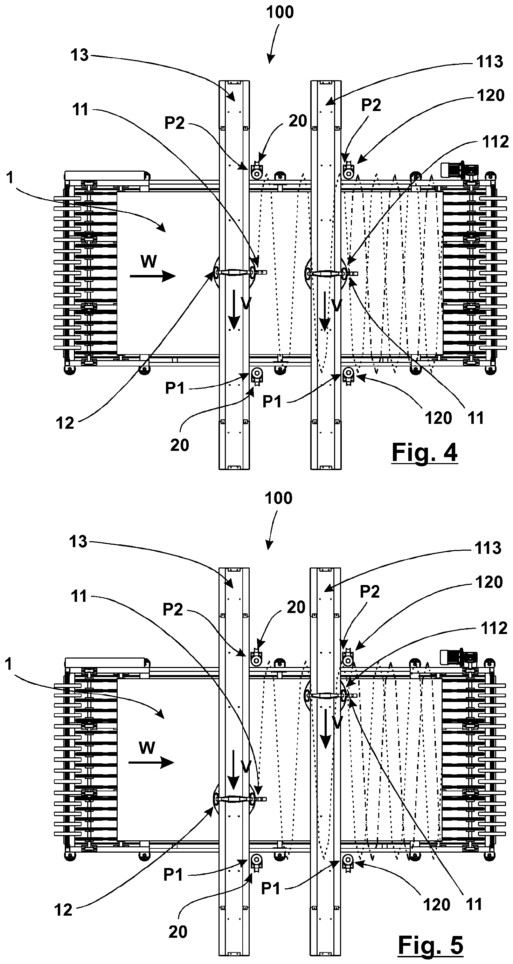

According to one exemplary configuration of the invention, a dispenser 11 is mounted on the first motor-driven carriage 12 and is moved along an application path constituted by a succession of passes P, back and forth respectively, schematically illustrated in Figures 4 and 5; during each pass an application area on one article 1 is covered, this area consisting of an approximately rectilinear band, whose angle with respect to the article itself depends on the combination of the motion speed of each dispenser 11 and the conveyance speed of the article 1.

In variants of the applicator device, which will not be further examined and in which include more than one dispenser 11, the first motor-driven carriage 12 is preferably made as a rod arranged longitudinally with respect to the forward direction W, with the dispensers 11 evenly spaced along the rod.

According to the invention, the applicator device 100 further comprises at least a second axis, comprising a second motor-driven carriage 112, made substantially as the already described first motor-driven carriage 12 and also provided with a dispenser 11. The second motor-driven carriage 112 is also controlled by the control unit 50 of the cabinet and moves along said direction line V by means of suitable actuators and motion timing means included in a manager program of the same second motor-driven carriage.

In a way entirely similar to that described for the first motor-driven carriage 12, the movements of the second motor-driven carriage 112 are controlled between two stop and motion reversing extreme positions P1, P2. These extreme positions are located outside the transit area of the articles 1, on opposite sides with respect to them.

In this embodiment, a second motor-driven carriage 112 is provided, also for simplicity of description. However, it shall be appreciated that, considering the general inventive concept underlying the present invention, further embodiments that include more than two motor-driven carriages 112,113 may be provided.

In the aforesaid second axis, the second motor-driven carriage 112 is supported by its own cross-wise second guide 113, that is arranged parallel with respect to the aforementioned guide 13, downstream with respect to the direction from which the articles 1 come and at a predetermined distance therefrom. The number of dispensers 11 mounted on the second carriage 112 is preferably, but not necessarily, identical to the number of dispensers 11 mounted on the first carriage 12.

Since guides 13, 113 are arranged transversely relative to the conveyance direction of the articles 1, the combination of the speed of these latter and of the motor-driven carriages 12, 112 causes the dispensers 11 application areas to take the form of product bands deposited according to a so-called "zig Zag" line. With a same conveyance speed of the articles 1, depending on the speed of the production line, the angle between two passes in opposite directions depends on the displacement speed of the motor-driven carriages 12,112.

For each motor-driven carriage 12,112, and therefore for each dispenser 11, the distance between two consecutive passes defines the step of the dispenser, which is therefore also dependent on the advancement speed of the production line and the transverse speed of the relative carriage 12,112. The inter-distance, i.e. the distance between the motor-driven carriages, is instead defined in an independent manner, as a function of the number of carriages provided and the desired coverage patterns.

According to a particularly important feature of the invention, the first motor-driven carriage 12 and the second motor-driven carriage 112 are controlled by the control unit 50 according to distinct timing, the management of which will be better detailed in the description of the operating method of application of the product on the tiles 1 implemented by the applicator device 100. In essence, the movement of the second motor-driven carriage 112 may be activated by the control unit 50 in step relation with the movement of the first carriage 12, or temporally offset.

The multiaxial applicator device 100 aims at the technical task of supporting the high production lines conveyance speed on which it is installed, also for the treatment of large sizes, despite the technological limitations of the movement speed of a motor-driven carriage like those above described, mainly due to the inertia of the carriage, the power required for the its operation and the materials that must withstand high mechanical stresses to which the carriage is subjected. In fact, the production lines carry articles at speeds well above 20 meters/minute. To run back and forth transverse distances even longer than 200 centimeters, with a narrow pitch sufficient to obtain a homogeneous coverage of the surface of articles that can be wide up to 200 centimeters, speed and accelerations would be necessary that are unsustainable from the mechanical point of view, or that however, require sizing of the structures and mechanisms of the applicators such as to make them absolutely uneconomic.

For this purpose, in the operating method according to the invention, the movement of the first motor-driven carriage 12 and those of the second motor-driven carriage 112 are controlled by the control unit 50 with distinct modes and in suitable phase relation, with respect to each other and to the advancement of articles 1.

In particular, different timing arrangements are provided for the motion of the motor-driven carriages 12, 112, respectively in step relation (see Figure 4) and with a preset time offset (figure 5).

In the step relation timing mode, the first and second carriages 12 112 reach the extreme positions P1, P2 at the same instant and, when activated, they go back at the same time from the aforementioned positions. This means that the distance between two consecutive passes on the surface of the article 1 depends exclusively on the distance between the two carriages 12, 112.

In the embodiment described, which includes two dispensers 11 mounted on two carriages 12,112, the "zig-zag" application areas on an article 1 in transit, thus obtained from the spouts 11 of the second motor-driven carriage 112 are shifted, compared to the corresponding areas of application obtained from the dispensers 11 of the first motor-driven carriage 12, with a fixed distance, and therefore intercalated between them. This distance depends on the pitch of each carriage and the distance between the two carriages 12,112.

Accordingly, by appropriately defining the distance between the carriages 12, 112 it is possible to pre-set the space between the passes of the relative dispensers 11, in such a way that one of the two dispensers 11 provides to "cover", with its pass, the spaces left free by the dispenser 11 of the other carriage.

In this way, with the same conveyance speed of articles 1, and considering that the carriages 12,112 operate at their maximum rated speed, each of the two carriages can operate with a pitch twice as much as a single carriage configuration. Considering the performance of a single carriage, therefore, proportionally higher line conveyance speed can be operated with the double motor-driven carriage.

A second operating mode provides that the second carriage 112 is moved by the control unit 50 with a pre-set time offset with respect to the motion of the first carriage 12. In essence, this means that, for each back and forth stroke from one of the extreme positions P1, P2, the second carriage 112 can leave an extreme position in which it is located before (if driven in advance) or after (if driven in delay) the moment at which the first carriage 12 leaves the same extreme position.

The technical effect that is achieved with the above-mentioned motion time shifts is to separate (with the motion advance) or approximate (with the motion delay) between each other the contiguous passes of the dispensers 11 of the two carriages 12,112.

In particular, with the drive of the second carriage 112 in motion delay the effect, particularly advantageous, may be obtained of having consecutive passes closer to one another on the surface of the article 1 (see the passes pattern shown in Figure 5), and then change the density of the same passes on the article.

In any case, with the same number of dispensers 11, by changing the motion shift between the dispensers, it is possible to adjust the coverage that is obtained on the item 1, as regards both the thickness of the product and the homogeneity of the application.

The result can be still improved by increasing the number of motor-driven carriages mounted in the same cabinet 10. More dispensers 11 can be also provided mounted on each motor-driven carriage, with spacing therebetween suitably chosen to obtain the desired coverage patterns.

Additional operational characteristics of the present method and the applicator device subject of the invention derive from the fact that, in any conventional applicator device, a significant percentage of the product dispensed from the dispensers 11 does not reach the article 1, because dispensed laterally, outside the area taken by the article itself, as it is delivered in the space that is left between an article and the next one, or because only part of the dispensers present on the motor-driven carriage are actually located above the article. The latter case occurs when the applicator device operates on either the initial portion or on the final portion of the article to be decorated.

In any case the effect obtained is to disperse a large part of the expensive decoration product inside the cabinet, in which it can be recovered only in part within the collection tank, then it must be filtered, and in any case contributes to dirtying the interior of the cabinet and the conveyor, forcing the staff to frequent production down-times to carry out cleaning operations.

For this purpose, the present method provides a further operational characteristic, made possible by the presence of two or more motor-driven carriages. In essence, the carriage and the dispensers supported by it are stopped if the control unit 50 understands that an eventual forward and return stroke would be carried out over a gap, ie without the presence of an article to decorate. The waiting stop positions are always made to match with the extreme positions P1, P2 described above, which are naturally out of the area taken by the article 1 in transit.

The evaluation of this situation can be easily performed by the manager program of the applicators present in the control unit 50, as it is known that it receives information in real time on the current position of the next article to be decorated, as well as that of all the carriages that form the applicator device.

A further structural and functional feature of the applicator device and the related method of operation also allows an advantageous exploitation of the stop times of each carriage, in such a way as to reduce considerably, both the effect of dispersion of the product inside the cabinet and the product loss, or at least its contamination.

In essence, the applicator device comprises collectors 20,120 (see figures 4 and 5), arranged stationary on both sides of the conveyor 2, immediately below the extreme positions P1, P2 of the dispensers 11, connected by means of associated ducts to the virgin product tank, so as to collect the product directly delivered by the same while they are located in (or pass by) the respective positions P1, P2, and thus to recover totally the product in non-contaminated conditions. Based on manufacturing requirements, it may be useful to stop the dispensers 11 in positions more distant from the conveyor 2. In this case also the position of the collectors 20,120 is conveniently moved rearwards.

Each of the collectors 20,120 is preferably formed by a sort of cup or funnel, and there are provided two of them for each dispenser 11 present in the applicator device. Alternatively, however, common collectors 20,120 may be provided for groups of dispensers 11, or a single elongated collector on each side, which has the extension such as to collect the product from all dispensers present.

The same inventive concept exposed in the description of the embodiment comprising two carriages 12,112 can be advantageously extended to different embodiments of the applicator device.

Basically, the applicator device according to the invention can include a number N of motor-driven carriages, as described above, each with a number M of dispensers. Each carriage is controlled by the control unit 50 in step relation with the movement of the other motor-driven carriages and with the advancement of the articles 1, and more precisely in simultaneous mode with each other or with suitably defined time offsets. In this way the spacing or the overlap between the application areas of the dispensers of each motor-driven carriage and the application areas of the dispensers of the other motor-driven carriages can be controlled.

In general, considering the motion of each motor-driven carriage at its maximum speed, the presence of a greater number of motor-driven carriages advantageously supports greater production line speeds and more complex coverage patterns.

A considerable advantage of the aforesaid applicator device structure is given by the fact that additional motor-driven carriages, with relative dispensers, can be added even after installation, with a simple modification of the dispenser manager program in the control unit 50, in order to face possible increases in the production line speed.

According to a further variant, each motor-driven carriage can be equipped with a single dispenser 11.

In this way, by exploiting the already described features of the invention, firstly, the speed of the production line supported by the applicator device can be maximized with the same number of dispensers, as all of them are motor-driven independently, and therefore the pitch of each of them can be maximized by interposing their passes with those of the other ones.

Secondly, in this way the recovery of the product can be maximized, and therefore the wastage of the same and the contamination of the application cabinet can be minimized. In fact, at each instant only the motor-driven carriages that will surely intercept an article 1 in transit can be activated, while all the others remain stationary in the region of a respective collector, and the related dispensers eject the product directly into the collector.

It is understood that what above has been described in a purely illustrative and non-limiting example. Therefore, possible changes and variants of the invention shall be deemed to fall within the scope of the present technical solution, as described above and claimed hereinafter.

## Claims

1. Multiaxial applicator device for application of products, such as enamels, engobes or similar products on ceramic articles, such as ceramic slabs or tiles, said articles (1) being moved in succession on a conveyor (2) in a forward direction (W), said applicator device (100) being equipped with a plurality of nozzles (11) controlled by a control unit (50) to supply a jet of said product onto each article (1) passing by, said applicator device (100) including: a first motor-driven carriage (12) and at least a second motor-driven carriage (112), each of them bearing mounted at least one said nozzle (11), the carriages being reciprocatingly movable in substantially parallel directions and transversely with respect to said forward direction (W), above said conveyor (2), between two extreme positions (P1, P2), for stopping and reversing the motion of said motor-driven carriages (12,112), these positions being located outside a transit area of said articles (1), on opposite sides with respect to the same, for moving the relative said nozzles (11) from one side to the other one of said conveyor (2); said movements defining, for each of said nozzle (11), application paths consisting of back and forth passes sequences, which in turn define corresponding application areas on the surface of said articles (1); said control unit (50) being provided with program means for controlling the movements of each of said motor-driven carriages (12,112) in reciprocal phase relation according to different times, intended for regulating, for each said dispenser (11) belonging to said at least second carriage (112), the position of a product application area on the article (1) with respect to application areas corresponding to dispensers (11) belonging to said first carriage (12) said applicator device (100) being **characterized in that** it moreover includes collecting means (20,120) situated on both sides of said conveyor and in correspondence of said extreme positions (P1,P2) of said motor-driven carriages (12,112), so as to collect and recover the product dispensed by said dispensers (11) during their dwell and/or during their reverse motion.

2. Applicator device in accordance with claim 1, **characterized in that** said first carriage (12) and at least a second carriage (112) are controlled in reciprocal step relation.

3. Applicator device in accordance with claim 1, **characterized in that** said at least a second carriage (112) is controlled according to a time offset with respect to said first carriage (12).

4. Applicator device in accordance with claim 1, **characterized in that** said motor-driven carriages (12,112) are supported by respective guides (13,113), mounted crosswise with respect to said forward direction (W) of the articles (1), the guides being parallel to each other and extending above said conveyor (2).

5. Applicator device in accordance with claim 1, **characterized in that** each said dispenser (11) is mounted onto a respective motor-driven carriage, is controlled in phase relation with the movement of the other carriages and with the advancement of said articles (1), each of said carriages being supported by a respective guide mounted crosswise with respect to said forward direction (W) of the articles (1), said guides being parallel to each other and extending above said conveyor (2).

6. Applicator device in accordance with claim 1, **characterized in that** a pair of the said collecting means (20,120) is provided for each dispenser (11).

7. Method for the application of decorating products to ceramic articles using the applicator device as in any preceding claim, said articles (1) being transported in succession along the conveyor (2), said method including the following operation steps: activation, by the control unit (50), of the first motor-driven carriage (12), carrying at least said one dispenser (11) for dispensing a decorating product, and alternative motion of the same along said path crosswise to the forward direction (W) of said articles (1), to apply said product on the surface of the same and along application areas defined by the combination of movement of said motor-driven carriage (12) and the advancement of the articles (1); activation, by said control unit (50), of at least said second motor-driven carriage (112), also carrying at least said one dispenser (11) for dispensing a decorating product, and reciprocating motion of the same along said path crosswise to the forward direction (W) of said articles (12), and parallel to the path of said first motor-driven carriage (12); the movements of said at least one second motor-driven carriage (112) being defined by said control unit (50) in step relation with the movements of said first motor-driven carriage (12) and the advancement of said articles (1), according to times independent from the motion of said first motor-driven carriage (12); said movements defining, for each said dispenser (11), application paths consisting of sequences of back and forth passes, which in turn define corresponding product application areas on the surface of said articles (1); the distance between the application areas of contiguous dispensers (11) being dependent on said times, to obtain application patterns on said articles (1) adjustable as a function of said times; wherein said first motor-driven carriage (12) or said at least one second motor-driven carriage (112) are maintained stationary in one of said extreme positions (P1, P2), if the application area of at least one of said dispensers (11) associated thereto, defined by one said back and forth passes, does not intercept a transiting article (1); the existence of said interception being assessed by said control unit (50) on the basis of the movement speed of said motor-driven carriages (12,112) and the position and conveyance speed of said articles (1) on said conveyor (2).

8. Method according to claim 7, **characterized in that** said at least one second motor-driven carriage (112) is moved by said control unit in step relation with said first motor-driven carriage (12).

9. Method according to claim 7, **characterized in that** said at least one second motor-driven carriage (112) is moved by said control unit with a time offset with respect to said first motor-driven carriage (12).

10. Method according to claim 7, **characterized in that** said dispenser (11) is moved by a respective motor-driven carriage, supported by its own transverse guide; that each motor-driven carriage is maintained stationary in one of said extreme positions (P1, P2) if the application area of the respective dispenser (11), defined by one said back and forth passes, does not intercept a transiting article (1); the existence of said interception being assessed by said control unit (50) on the basis of the movement speed of said motor-driven carriages and the position and conveyance speed of said articles (1) on said conveyor (2).

11. Method according to any one of the claims 7 to 10, **characterized in that** a collection and recovery step is also provided for the product dispensed by said dispensers (11) while the same are in one of said extreme positions (P1, P2), dwelling or in reverse motion.

## Patentansprüche

1. Mehrachsige Auftragsvorrichtung zum Auftragen von Produkten wie Emaillen, Engoben oder ähnlichen Produkten auf keramische Produkte wie Keramikplatten oder -fliesen, wobei die Gegenstände (1) nacheinander auf einem Förderer (2) in einer Vorwärtsrichtung (W) bewegt werden, wobei die Auftragsvorrichtung (100) mit einer Vielzahl von Düsen (11) ausgestattet ist, die von einer Steuereinheit (50) gesteuert werden, um einen Strahl des Produkts auf jeden vorbeilaufenden Gegenstand (1) zu liefern, wobei die Auftragsvorrichtung (100) umfasst: einen ersten motorgetriebenen Schlitten (12) und mindestens einen zweiten motorgetriebenen Schlitten (112), an denen jeweils mindestens eine der Düsen (11) angebracht ist, wobei die Schlitten in im Wesentlichen parallelen Richtungen und quer zur Vorwärtsrichtung (W) oberhalb des Förderers (2) hin- und herbewegbar sind, zwischen zwei extremen Positionen (P1, P2) zum Anhalten und Umkehren der Bewegung der motorgetriebenen Schlitten (12, 112), wobei diese Positionen außerhalb eines Durchgangsbereichs der Artikel (1) auf gegenüberliegenden Seiten in Bezug auf denselben angeordnet sind, um die relativen Düsen (11) von einer Seite des Förderers (2) zur anderen zu bewegen; wobei diese Bewegungen für jede der Düsen (11) Aufbringungspfade definieren, die aus Hin- und Rücklaufsequenzen bestehen, die wiederum entsprechende Aufbringungsbereiche auf der Oberfläche der Gegenstände (1) definieren; wobei die Steuereinheit (50) mit Programmmitteln zum Steuern der Bewegungen jedes der motorgetriebenen Schlitten (12, 112) in wechselseitiger Phasenbeziehung gemäß unterschiedlichen Zeiten versehen ist, die dazu bestimmt sind, für jeden der Düsen (11), der zu dem mindestens zweiten Schlitten (112) gehört, die Position eines Produktaufbringungsbereichs auf dem Artikel (1) in Bezug auf die Düsen (11), die den Aufbringungsbereiche entsprechen und die zu dem ersten Schlitten (12) gehören, zu regulieren, wobei die Auftrageinrichtung (100) **dadurch gekennzeichnet ist, dass** sie außerdem Auffangmittel (20, 120) aufweist, die auf beiden Seiten des Förderers und in Übereinstimmung mit den Endpositionen (P1, P2) der motorgetriebenen Schlitten (12, 112) angeordnet sind, um das von den Düsen (11) ausgegebene Produkt während ihres Verweilens und/oder während ihrer Rückwärtsbewegung aufzufangen und zurückzugewinnen.

2. Auftragsvorrichtung nach Anspruch 1, **dadurch gekennzeichnet, dass** der erste Schlitten (12) und mindestens ein zweiter Schlitten (112) in gegenseitiger Schrittbeziehung gesteuert werden.

3. Auftragsvorrichtung nach Anspruch 1, **dadurch gekennzeichnet, dass** der mindestens eine zweite Schlitten (112) zeitlich versetzt zu dem ersten Schlitten (12) gesteuert wird.

4. Auftragsvorrichtung nach Anspruch 1, **dadurch gekennzeichnet, dass** die motorgetriebenen Schlitten (12, 112) von jeweiligen Führungen (13, 113) getragen werden, die quer zur Vorwärtsrichtung (W) der Gegenstände (1) angebracht sind, wobei die Führungen parallel zueinander sind und sich oberhalb des Förderers (2) erstrecken.

5. Auftragsvorrichtung nach Anspruch 1, **dadurch gekennzeichnet, dass** jeder der Düsen (11) auf einem jeweiligen motorgetriebenen Schlitten montiert ist, in Phasenbeziehung mit der Bewegung der anderen Schlitten und mit dem Vorschub der Artikel (1) gesteuert wird, wobei jeder der Schlitten von einer jeweiligen Führung getragen wird, die quer in Bezug auf die Vorwärtsrichtung (W) der Artikel (1) montiert ist, wobei die Führungen parallel zueinander sind und sich oberhalb des Förderers (2) erstrecken.

6. Auftragsvorrichtung nach Anspruch 1, **dadurch gekennzeichnet, dass** für jede Düse (11) ein Paar der Sammelmittel (20, 120) vorgesehen ist.

7. Verfahren zum Auftragen von Dekorationsprodukten auf keramische Gegenstände unter Verwendung der Auftragsvorrichtung nach einem der vorhergehenden Ansprüche, wobei die Gegenstände (1) nacheinander entlang des Förderers (2) transportiert werden, wobei das Verfahren die folgenden Arbeitsschritte umfasst: Aktivierung, durch die Steuereinheit (50), des ersten motorgetriebenen Schlittens (12), der mindestens den eine Düse (11) für ein Dekorationsprodukt trägt, und alternative Bewegung desselben entlang des Pfades quer zur Vorwärtsrichtung (W) der Gegenstände (1), um das Produkt auf die Oberfläche derselben und entlang von Applikationsbereichen aufzutragen, die durch die Kombination der Bewegung des motorgetriebenen Schlittens (12) und der Vorwärtsbewegung der Gegenstände (1) definiert sind; Aktivierung, durch die Steuereinheit (50), mindestens des zweiten motorgetriebenen Schlittens (112), der auch mindestens den eine Düse (11) zum Ausgeben eines Dekorationsprodukts trägt, und Hin- und Herbewegung desselben entlang des Pfades quer zur Vorwärtsrichtung (W) der Gegenstände (12) und parallel zum Pfad des ersten motorgetriebenen Schlittens (12); wobei die Bewegungen des mindestens einen zweiten motorgetriebenen Schlittens (112) durch die Steuereinheit (50) in schrittweiser Beziehung zu den Bewegungen des ersten motorgetriebenen Schlittens (12) und dem Vorschub der Artikel (1) gemäß Zeiten unabhängig von der Bewegung des ersten motorgetriebenen Schlittens (12) definiert werden; wobei die Bewegungen für jede Düse (11) Aufbringungspfade definieren, die aus Sequenzen von Hin- und Herbewegungen bestehen, die ihrerseits entsprechende Produktaufbringungsbereiche auf der Oberfläche der Artikel (1) definieren; wobei der Abstand zwischen den Aufbringungsbereichen benachbarter Düsen (11) von den Zeiten abhängt, um Aufbringungsmuster auf den Artikeln (1) zu erhalten, die in Abhängigkeit von den Zeiten einstellbar sind; wobei der erste motorgetriebene Schlitten (12) oder der mindestens eine zweite motorgetriebene Schlitten (112) in einer der Extrempositionen (P1, P2) stationär gehalten werden, wenn der Aufbringungsbereich von mindestens einem der damit verbundenen Düsen (11), der durch eine der Hin- und Herfahrten definiert ist, einen durchlaufenden Artikel (1) nicht abfängt; wobei das Vorhandensein des Abfangens von der Steuereinheit (50) auf der Grundlage der Bewegungsgeschwindigkeit der motorgetriebenen Schlitten (12, 112) und der Position und Transportgeschwindigkeit der Artikel (1) auf dem Förderer (2) beurteilt wird.

8. Verfahren nach Anspruch 7, **dadurch gekennzeichnet, dass** der mindestens eine zweite motorgetriebene Schlitten (112) von der Steuereinheit in Schrittbeziehung mit dem ersten motorgetriebenen Schlitten (12) bewegt wird.

9. Verfahren nach Anspruch 7, **dadurch gekennzeichnet, dass** der mindestens eine zweite motorgetriebene Schlitten (112) von der Steuereinheit zeitlich versetzt zu dem ersten motorgetriebenen Schlitten (12) bewegt wird.

10. Verfahren nach Anspruch 7, **dadurch gekennzeichnet, dass** die Düse (11) von einem jeweiligen motorgetriebenen Schlitten bewegt wird, der von seiner eigenen Querführung getragen wird; dass jeder motorgetriebene Schlitten in einer der Extrempositionen (P1, P2) stationär gehalten wird, wenn der Anwendungsbereich der jeweiligen Düsen (11), der durch eine der Hin- und Herfahrten definiert ist, einen durchlaufenden Artikel (1) nicht abfängt; wobei das Vorhandensein des Abfangens von der Steuereinheit (50) auf der Grundlage der Bewegungsgeschwindigkeit der motorgetriebenen Schlitten und der Position und Transportgeschwindigkeit der Artikel (1) auf dem Förderer (2) beurteilt wird.

11. Verfahren nach einem der Ansprüche 7 bis 10, **dadurch gekennzeichnet, dass** auch ein Sammel- und Rückgewinnungsschritt für das aus den Düsen (11) ausgegebene Produkt vorgesehen ist, während sich diese in einer der Endpositionen (P1, P2) befinden, verweilend oder in Rückwärtsbewegung.

## Revendications

1. Dispositif applicateur multiaxial pour l'application de produits, tels que des émaux, des engobes ou des produits similaires sur des produits céramiques, tels que des dalles ou des carreaux de céramique, lesdits articles (1) étant déplacés en succession sur un convoyeur (2) dans une direction d'avance (W), ledit équipement d'application (100) étant équipé d'une pluralité de buses (11) commandées par une unité de commande (50) pour fournir un jet dudit produit sur chaque article (1) passant par là, ledit dispositif applicateur (100) comprenant: un premier chariot motorisé (12) et au moins un deuxième chariot motorisé (112), chacun d'eux étant monté sur au moins une desdites buses (11), les chariots étant mobiles en va-et-vient dans des directions sensiblement parallèles et transversalement par rapport à ladite direction d'avance (W), au-dessus dudit convoyeur (2), entre deux positions extrêmes (P1, P2), pour arrêter et inverser le mouvement desdits chariots motorisés (12, 112), ces positions étant situées à l'extérieur d'une zone de transit desdits articles (1), sur des côtés opposés par rapport à celle-ci, pour déplacer lesdites buses relatives (11) d'un côté à l'autre dudit convoyeur (2); lesdits mouvements définissant, pour chacune desdites buses (11), des trajets d'application consistant en des séquences de passages en arrière et en avant, qui définissent à leur tour des zones d'application correspondantes sur la surface desdits articles (1); ladite unité de commande (50) étant pourvue de moyens de programme pour commander les mouvements de chacun desdits chariots motorisés (12, 112) en relation de phase réciproque selon des temps différents, destinés à réguler, pour chacun desdits distributeurs (11) appartenant audit au moins deuxième chariot (112), la position d'une zone d'application de produit sur l'article (1) par rapport aux zones d'application correspondant aux distributeurs (11) appartenant audit premier chariot (12), ledit dispositif applicateur (100) étant **caractérisé en ce qu'il** comprend en outre des moyens de collecte (20, 120) situés des deux côtés dudit convoyeur et en correspondance avec lesdites positions extrêmes (P1, P2) desdits chariots motorisés (12, 112), de manière à collecter et à récupérer le produit distribué par lesdits distributeurs (11) pendant leur arrêt et/ou pendant leur mouvement inverse.

2. Dispositif d'application selon la revendication 1, **caractérisé en ce que** ledit premier chariot (12) et au moins un deuxième chariot (112) sont commandés en relation de pas réciproque.

3. Dispositif d'application selon la revendication 1, **caractérisé en ce que** ledit au moins un deuxième chariot (112) est commandé selon un décalage temporel par rapport audit premier chariot (12).

4. Dispositif d'application selon la revendication 1, **caractérisé en ce que** lesdits chariots motorisés (12, 112) sont supportés par des guides respectifs (13, 113), montés transversalement par rapport à ladite direction d'avance (W) des articles (1), les guides étant parallèles les uns aux autres et s'étendant au-dessus dudit convoyeur (2).

5. Dispositif d'application selon la revendication 1, **caractérisé en ce que** chacun desdits distributeurs (11) est monté sur un chariot motorisé respectif, est commandé en relation de phase avec le mouvement des autres chariots et avec l'avancement desdits articles (1), chacun desdits chariots étant supporté par un guide respectif monté transversalement par rapport à ladite direction d'avance (W) des articles (1), lesdits guides étant parallèles les uns aux autres et s'étendant au-dessus dudit convoyeur (2).

6. Dispositif d'application selon la revendication 1, **caractérisé en ce qu'**une paire desdits moyens de collecte (20, 120) est prévue pour chaque distributeur (11).

7. Procédé pour l'application de produits de décoration sur des articles en céramique en utilisant le dispositif applicateur selon l'une quelconque des revendications précédentes, lesdits articles (1) étant transportés en succession le long du convoyeur (2), ledit procédé comprenant les étapes opérationnelles suivantes: activation, par l'unité de commande (50), du premier chariot motorisé (12), portant au moins ledit un distributeur (11) pour distribuer un produit de décoration, et mouvement alternatif de celui-ci le long dudit trajet transversalement à la direction d'avancement (W) desdits articles (1), pour appliquer ledit produit sur la surface de ceux-ci et le long de zones d'application définies par la combinaison du mouvement dudit chariot motorisé (12) et de l'avancement des articles (1); l'activation, par ladite unité de commande (50), d'au moins ledit deuxième chariot motorisé (112), portant également au moins ledit un distributeur (11) pour distribuer un produit de décoration, et mouvement de va-et-vient de celui-ci le long dudit trajet transversalement à la direction d'avancement (W) desdits articles (12), et parallèlement au trajet dudit premier chariot motorisé (12); les mouvements dudit au moins un deuxième chariot motorisé (112) étant définis par ladite unité de commande (50) en relation pas à pas avec les mouvements dudit premier chariot motorisé (12) et l'avancement desdits articles (1), selon des temps indépendants du mouvement dudit premier chariot motorisé (12); lesdits mouvements définissant, pour chacun desdits distributeurs (11), des trajets d'application consistant en des séquences de passages en arrière et en avant, qui définissent à leur tour des zones d'application de produit correspondantes sur la surface desdits articles (1); la distance entre les zones d'application de distributeurs contigus (11) dépendant desdits temps, pour obtenir des modèles d'application sur lesdits articles (1) réglables en fonction desdits temps; dans lequel ledit premier chariot motorisé (12) ou ledit au moins un deuxième chariot motorisé (112) sont maintenus stationnaires dans l'une desdites positions extrêmes (P1, P2), si la zone d'application d'au moins un desdits distributeurs (11) qui lui est associé, définie par l'un desdits passages en va-et-vient, n'intercepte pas un article en transit (1); l'existence de ladite interception étant évaluée par ladite unité de commande (50) sur la base de la vitesse de déplacement desdits chariots motorisés (12, 112) et de la position et de la vitesse de transport desdits articles (1) sur ledit convoyeur (2).

8. Procédé selon la revendication 7, **caractérisé en ce que** ledit au moins un deuxième chariot motorisé (112) est déplacé par ladite unité de commande en relation de pas avec ledit premier chariot motorisé (12).

9. Procédé selon la revendication 7, **caractérisé en ce que** ledit au moins un deuxième chariot motorisé (112) est déplacé par ladite unité de commande avec un décalage temporel par rapport audit premier chariot motorisé (12).

10. Procédé selon la revendication 7, **caractérisé en ce que** ledit distributeur (11) est déplacé par un chariot motorisé respectif, supporté par son propre guide transversal; **en ce que** chaque chariot motorisé est maintenu immobile dans l'une desdites positions extrêmes (P1, P2) si la zone d'application du distributeur respectif (11), définie par l'un desdits passages en va-et-vient, n'intercepte pas un article en transit (1); l'existence de ladite interception étant évaluée par ladite unité de commande (50) sur la base de la vitesse de déplacement desdits chariots motorisés et de la position et de la vitesse de transport desdits articles (1) sur ledit convoyeur (2).

11. Procédé selon l'une quelconque des revendications 7 à 10, **caractérisé en ce qu'**une étape de collecte et de récupération est également prévue pour le produit distribué par lesdits distributeurs (11) pendant que ceux-ci se trouvent dans l'une desdites positions extrêmes (P1, P2), en marche avant ou en marche arrière.
